# EUROPEAN PATENT APPLICATION

(11) **EP 4 789 854 A1**
(43) Date of publication of application: **12.08.2026**
(21) Application number: 25156073.6
(22) Date of filing: 05.02.2025
(51) Int. Cl.: B29D 11/00, B05C 3/109, B05D 1/18

(54) **METHOD FOR DIP COATING AN OPHTHALMIC LENS, LACQUER BASIN AND COATING DEVICE**

(71) Applicant: Carl Zeiss Vision International GmbH, 73430 Aalen (DE)
(72) Inventor: KURZ, Norbert, 73430 Aalen (DE); WILHELM, Christian, 73447 Oberkochen (DE); WIDMANN, Wolfgang, 73430 Aalen (DE)
(74) Representative: Pearl Cohen EU

(57) **Abstract**

Provided is a method for dip coating an ophthalmic lens. The method comprises providing a coating device comprising a process volume containing a lacquer mixture, dipping the ophthalmic lens into the process volume of the coating device such that the ophthalmic lens is entirely immersed in the stream of the lacquer mixture, and removing the ophthalmic lens from the process volume and curing the lacquer mixture adhering to the ophthalmic lens. The method further comprises adjusting the lacquer mixture prior to dipping the ophthalmic lens into the process volume such that the lacquer mixture meets one or more or all of the following conditions at a pressure of 1,01325 bar:
- a viscosity of the lacquer mixture (14) is in a range from 0,587 mPa·s to 200 mPa·s at a temperature of 20° C;
- a surface tension of the lacquer mixture (14) is in a range from 22,6 mN/m to 150 mN/m at a temperature of 20° C;
- a density of the lacquer mixture (14) is in a range from 0,787 kg/m3 to 1.280 kg/m3 at a temperature of 20° C;
- a volume flow of the lacquer mixture (14) fed into the process volume is in a range from 1 L/min to 15 L/min; and
- a temperature of the lacquer mixture (14) used in the process volume is in a range from 8° C to 28° C.

## Description

Provided are a method for dip coating an ophthalmic lens, a method for manufacturing an ophthalmic lens, an ophthalmic lens obtained or obtainable by such a method, a lacquer basin for a dip coating device, and a coating device for dip coating an ophthalmic lens. The disclosure is, thus, related to the manufacturing of ophthalmic lenses.

Coating devices for dip coating one or more ophthalmic lenses often comprise a lacquer basin providing a process volume containing a stream of lacquer mixture in which the one or more ophthalmic lenses may be inserted for dip coating the one or more ophthalmic lenses. The lacquer mixture may be fed into the process volume from the bottom to achieve a laminar flow of the lacquer mixture in the process volume. At the top of the process volume an overflowing stream of the lacquer mixture may be collected by an overflow channel adjacent to a side wall confining the process volume. The collected overflow of lacquer mixture may be recycled and reused in the cycle of lacquer mixture provided to the process volume.

The overflowing stream of lacquer mixture often exhibits a significant exposure to ambient air which may result in parts of the stream of the overflowing lacquer mixture to solidify, resulting in undesired lacquer particles forming in the lacquer mixture. These particles may be regarded as contaminants which may reduce the quality of the coating result if not filtered out of the cycle of lacquer mixture.

The document EP 4 252 922 A1 describes a coating device for dip coating an ophthalmic lens, wherein the coating device comprises a lacquer basin and an overflow channel.

It is the objective technical problem to provide a method for dip coating an ophthalmic lens, a lacquer basin and a coating device avoiding the disadvantages of the prior art.

In view of EP 4 252 922 A1 as closest prior art the objective technical problem of the claimed subject-matter may relate to providing a lacquer basin and a coating device offering an improved coating quality and/or a reduced risk of imperfections in the coating results.

This problem is solved by the coating method, the manufacturing method, the ophthalmic lens, the lacquer basin, and the coating device having the features of the respective independent claim. Optional embodiments are provided in the dependent claims and the description.

Provided is a method for dip coating an ophthalmic lens. The method comprises providing a coating device comprising a process volume containing a lacquer mixture, dipping the ophthalmic lens into the process volume of the coating device such that the ophthalmic lens is entirely immersed in the stream of the lacquer mixture, and removing the ophthalmic lens from the process volume and curing the lacquer mixture adhering to the ophthalmic lens. The method further comprises adjusting the lacquer mixture prior to dipping the ophthalmic lens into the process volume such that the lacquer mixture meets one or more or all of the following conditions at a pressure of 1,01325 bar:
- a viscosity of the lacquer mixture (14) is in a range from 0,587 mPa·s to 200 mPa·s at a temperature of 20° C;
- a surface tension of the lacquer mixture (14) is in a range from 22,6 mN/m to 150 mN/m at a temperature of 20° C;
- a density of the lacquer mixture (14) is in a range from 0,787 kg/m3 to 1.280 kg/m³ at a temperature of 20° C;
- a volume flow of the lacquer mixture (14) fed into the process volume is in a range from 1 L/min to 15 L/min; and
- a temperature of the lacquer mixture (14) used in the process volume is in a range from 8° C to 28° C.

Further, a method for manufacturing an ophthalmic lens is provided. The method comprises dip coating the ophthalmic lens using a method for dip coating according to the disclosure.

In addition, a lacquer basin for a dip coating device is provided, wherein the lacquer basin comprises a side wall confining a process volume for dip coating one or more objects in a stream of the lacquer mixture fed into the process volume. An upper edge of the side wall provides an overflow structure. The lacquer basin further comprises an overflow channel being arranged directly at an outer side of the side wall, wherein the overflow channel is adapted to collect a lacquer mixture overflowing from the process volume over the overflow structure. The overflow structure has a curved contour which is adapted to enable a flow of the lacquer mixture to overflow the overflow structure from the process volume into the overflow channel as a continuous film.

Further, a coating device for dip coating an ophthalmic lens is provided, which is characterized in that the coating device comprises a lacquer basin according to the disclosure.

Furthermore, an ophthalmic lens obtained or obtainable by a manufacturing method according to the disclosure is provided.

Adjusting the lacquer mixture is to be understood as adjusting one or more parameters of the lacquer mixture or of its constituents. Adjusting the lacquer mixture may be carried out one time, multiple times, regularly or continuously. Adjusting the lacquer mixture may be carried out in an open-loop controlled manner or in a closed-loop controlled manner. Adjusting the lacquer mixture may be carried out based on measurement values concerning the temperature of the lacquer mixture of its constituents and/or measurement values concerning a viscosity and/or flow characteristics of the lacquer mixture.

The conditions of the lacquer mixture being specified for a pressure of 1,01325 bar does not require the adjustment of the lacquer mixture and/or the dip coating process being carried out at said pressure. When carried out at a different pressure, the respective parameter ranges of the specified conditions may vary depending on the pressure dependency of the respective value.

A lens blank may relate to an unprocessed precursor of a spectacle lens, such as a lens blank having an unprocessed front surface and an unprocessed back surface. The lens blank may be provided in a molding process. The lens blank may, however, also relate to a partly processed precursor of a spectacle lens. For instance, the lens blank may have a front surface which is partially or fully processed, and which may be covered with a protective foil or coating. As generally understood and defined in section 3.8.1 of ISO 13666:2019 (E), a lens blank may be a piece of optical material with one optically finished surface for the making of a lens.

As generally understood and defined in section 3.5.2 of ISO 13666:2019 (E), a spectacle lens may be an ophthalmic lens according to section 3.5.1 of ISO 13666:2019 (E) worn in front of, but not in contact with, the eyeball.

Dip coating of an ophthalmic lens means that the ophthalmic lens to be coated may be dipped into the lacquer mixture contained in the lacquer basin. For this purpose, the lacquer basin may be at least partly open on the upper side to allow inserting the ophthalmic lens. The coating may be, for instance, a hard coating to increase a scratch resistance of the ophthalmic lens. For instance, a coating may have a thickness between 1 µm and 5 µm. A coating may be applied to neat ophthalmic lenses or lens blanks that do not have a coating and/or to ophthalmic lenses having already one or more coatings prior to the dip coating. The device may be adapted to sequentially dip coat multiple ophthalmic lenses and/or to dip coat more than one ophthalmic lens at least partly in parallel. The side wall may confine the lacquer mixture in the process volume such that the process volume is accessible from the top and the gravitational force keeps the lacquer mixture in the process volume defined by the side wall. The side wall may be overflown when feeding a stream of lacquer mixture into the process volume, optionally from the bottom of the lacquer basin.

The lacquer mixture may be a liquid comprising the lacquer and a solvent, wherein a viscosity and/or a density and/or a surface tension of the lacquer mixture may be adjusted by modifying a relative concentration, i.e. a relative mixing ratio, of the lacquer and the solvent. Dosing the lacquer and/or the solvent may comprise controlling the supplied amounts of lacquer and/or solvent.

The lacquer basin may be a receptacle having an inlet for feeding an influx of the lacquer mixture into the lacquer basin and may be opened at the top to allow inserting one or more ophthalmic lenses into the lacquer mixture for dip coating. The lacquer mixture may be continuously provided to the lacquer basin to achieve a laminar flow, wherein the laminar flow and a displacement of volume of lacquer mixture due to an insertion of an ophthalmic lens may provoke an overflow of lacquer mixture from the lacquer basin into the overflow channel. The overflown lacquer mixture may then be collected from the overflow channel and fed into the tubing system as a return flux. The overflow channel may be arranged directly at an outer side of a side wall of the lacquer basin. In particular, the outer side of the side wall of the lacquer basin may form an inner wall of the overflow channel. However, the overflow channel may also be provided in the form of an overflow basin arranged around and/or underneath the lacquer basin. The overflow channel may be provided in one piece with the lacquer basin and/or separately from the lacquer basin. The lacquer basin may have a vertically extending central axis, wherein the process section adjoins the inlet section along the central axis of the lacquer basin.

The section of the lacquer basin, in which the ophthalmic lens is inserted for dip coating is referred to as the process section or process volume. The process volume may have an extension along the central axis of the lacquer basin which is equal to or larger than the extension of the ophthalmic lens(es) to be dip coated. In particular, the process volume may have a depth being equal to or larger than the ophthalmic lens to allow for a complete immersion of the ophthalmic lens into the lacquer mixture when dip coating the ophthalmic lens.

The side wall of the lacquer basin may be the side wall for confining the lacquer mixture in a lateral dimension in the process volume. The process volume may be accessible at the bottom to feed a lacquer mixture into the process volume. The process volume may be open at the top to access the process volume for inserting one or more ophthalmic lenses for dip coating the one or more ophthalmic lenses. The side wall may extend in a cylindrical manner and may extend in a concentrical manner around a central axis of the lacquer basin.

The overflow structure may be an integral part of the side wall and may constitute or comprise the upper edge of the side wall. The overflow structure may have, along its cross-sectional shape, i.e. when cut in a radial direction starting from the central axis of the lacquer basin, the curved contour adapted to enable the flow of the lacquer mixture overflowing the overflow structure from the process volume into the overflow channel as a continuous film. With regard to its size, dimension, material and/or cross-sectional curved contour the overflow structure may be adapted with regard to its size, dimension, material and/or cross-sectional curved contour such as to enable the flow of the overflowing lacquer mixture as a continuous film.

The curved contour of the overflow structure may relate to a curved cross-sectional shape of the upper end of the side wall, wherein the cross-sectional shape is a shape in a cross-section cut in a plane including the central axis of the lacquer basin and/or the dip coating device. The cross-sectional shape being curved may be understood as the cross-sectional shape being round or rounded. This may provide a cross-sectional profile without kinks and/or edges. The curved contour may be established by providing the overflow structure as a smooth and/or rounded surface to reduce and/or avoid obstacles for the flow of the lacquer mixture flowing over the overflow structure. The curved contour may be adapted to reduce and/or minimize a flow resistance for the flow of lacquer mixture flowing over the overflow structure. The curved contour being curved may be understood as having a roundish shape. The roundish shape may be without any sharp edges which could increase a resistance for the flow of the lacquer mixture over the overflow structure. The curved contour may be established by providing the overflow structure with a cross-sectional shape not having a radius of curvature of less than 1 mm.

The flow as a continuous film may be understood as an uninterrupted flow. When continuously feeding lacquer mixture to the process volume from the bottom, a continuous overflow of lacquer mixture over the overflow structure may occur. A continuous overflow of this overflowing lacquer mixture may be achieved by the overflow structure, such that no interruptions in the overflow of the lacquer mixture occurs until the overflown lacquer mixture is received in the overflow channel.

A section of the lacquer basin in which the lacquer mixture is injected into the lacquer basin and in which the stream of lacquer mixture establishes a flow of the lacquer mixture within the lacquer basin may be referred to as inlet section. An injection nozzle for injecting the lacquer mixture into the inlet section of the lacquer basin may be provided at the inlet of the inlet section. The lacquer basin may have a conical shape in the inlet section in order to reduce the pressure and/or velocity of the lacquer mixture injected into the lacquer basin.

The lacquer basin may be formed as a single piece, wherein the inlet section and the process volume may relate to different parts of the single-pieced lacquer basin. However, the lacquer basin may be formed from several pieces. A side wall of the inlet section may have a different shape than the side wall of the process volume. For instance, the side wall may have a cylindrical shape in the process section and a conical shape in the inlet section. The transition between the inlet section and the process section may be such a part of the side wall, in which the side wall changes its slope. However, according to some embodiments, the transition may be unrelated to a change of slope of the side wall and may be merely defined by the stream of the injected lacquer mixture having completed its spatial extension after the injection.

The disclosure provides the advantage that flow breaks of the lacquer mixture overflowing the side wall into the overflow channel can be reduced or avoided. This bears the further advantage that a formation of undesired incrustations due to an undesired drying of the overflow lacquer mixture between the process volume and the overflow channel can be reduced or avoided. This provides the further advantage that the risk of lump formation in the lacquer mixture can be reduced or avoided which may reduce or avoid the risk of contaminant particles arising in the lacquer mixture. Moreover, this may provide the advantage that a risk of obstructions in the lacquer mixture cycle system can be reduced or avoided resulting in a higher reliability of the lacquer basin and/or the coating device.

Adjusting the lacquer mixture as well as providing the overflow structure with a curved contour may both, alternatively or in combination, allow ensuring the lacquer mixture to overflow as a continuous film. This may reduce the risk of lump formation and/or the formation of incrustations.

Adjusting the lacquer mixture may include at least one of adjusting a ratio of lacquer to solvent of the lacquer mixture, adjusting a temperature of a lacquer supplied to the lacquer mixture, adjusting a temperature of a solvent supplied to the lacquer mixture, and adjusting a temperature of the lacquer mixture. This may facilitate the adjustment of the lacquer mixture to meet the specified conditions. Adjusting the temperature of the lacquer mixture and/or of its constituents may include heating and/or cooling the lacquer mixture and/or the solvent and/or the lacquer.

The lacquer basin may be provided as a lacquer basin according to the disclosure.

The curved contour of the overflow structure may have one or more convex curvatures which are overflown by the lacquer mixture when the lacquer mixture overflows the overflow structure from the process volume to the overflow channel. The one or more convex curvatures may have a radius of curvature in a range between 1 mm and 15 mm. This may further reduce a risk of a flow stall of the overflowing lacquer mixture and may, hence, reduce the risk of the overflowing lacquer mixture drying up and solidfying or forming undesired solid particles.

The lacquer basin may have the curved contour of the overflow structure with exactly one convex curvature having a radius of curvature in the range from 5 mm to 15 mm and optionally in the range from 10.5 mm to 15 mm. A radius of curvature in this range may provide the advantage that small curves or edges can be avoided at the curved contour which could otherwise promote an undesired flow stall and an undesired drying of the overflowing lacquer mixture. The overflow structure having exactly one curvature may provide the advantage that the overflowing lacquer mixture may flow over the curved contour along one rounding without a need of a change of inclination which may further reduce a risk of flow stall.

The lacquer basin may have a curved contour of the overflow structure with two or more convex curvatures, each having a radius of curvature in a range from 1 mm to 9 mm and optionally in a range from 1 mm to 5 mm. This may provide a larger degree of freedom in the design of the curved contour. Moreover, this may provide the advantage that an effort for manufacturing the overflow structure and/or the side wall may be reduced.

Optionally, the curved contour has no concave indentations. Optionally, the overflow structure is free from concave indentations or recesses. This may provide the advantage that a risk of flow stall of the overflowing lacquer mixture may be further reduced.

The curved contour may be adapted to flow properties of the lacquer mixture to be used with the lacquer basin. Optionally, a radius of curvature of the one or more convex curvatures of the curved contour may be adapted to the flow properties of the lacquer mixture to be used with the lacquer basin.

The adaption of the curved contour to the flow properties of the lacquer mixture may comprise adapting the curved contour to a viscosity of the lacquer mixture. This may serve the purpose of enabling a continuous stream of the overflowing lacquer mixture as a continuous film. The higher the viscosity of the lacquer mixture, the larger the radius of curvature of the curved contour and/or some or all convex curvatures of the curved contour may be chosen. Likewise, the lower the viscosity of the lacquer mixture, the smaller the radius of curvature of the curved contour and/or some or all convex curvatures of the curved contour may be chosen. The radii of curvature of the curved contour and/or of one or more or all convex curvatures of the curved contour may be chosen in a proportional manner with regard to the viscosity of the lacquer mixture to be used with the lacquer basin.

Moreover, the adaptation may comprise adjusting one or more surface properties of the overflow structure. This may comprise reducing or avoiding obstacles for the overflow of the lacquer mixture at the overflow structure. The overflow structure may be adapted to provide no or only negligible obstacles for the overflow of the lacquer mixture. Alternatively or additionally, the overflow structure may be adapted to be homogeneous and/or isotropic over the entire edge of the side wall of the lacquer basin. Moreover, the overflow structure may be adapted to have a smooth surface, i.e. a small roughness, to reduce friction between the surface profile and the overflowing lacquer mixture. This may allow maintaining a high velocity of the overflow and avoid an undesired deceleration of the overflowing lacquer mixture. Moreover, this may allow for avoiding an entry of air bubbles into the overflow of the lacquer mixture. Optionally, a surface roughness of the overflow structure may be increased for an intended use with a lacquer mixture having a low viscosity.

The flow properties of the lacquer mixture may comprise at least one of the following properties:
- a viscosity of the lacquer mixture, wherein the viscosity optionally is in a range from 0,587 mPa·s to 200 mPa·s at a temperature of 20° C,
- a surface tension of the lacquer mixture, wherein the surface tension optionally is in a range from 22,6 mN/m to 150 mN/m at a temperature of 20° C,
- a density of the lacquer mixture, wherein the density of the lacquer mixture optionally is in a range from 0,787 kg/m³ to 1.280 kg/m³ at a temperature of 20° C,
- a volume flow of the lacquer mixture fed into the process volume, wherein the volume flow optionally is in a range from 1 L/min to 15 L/min; and
- a temperature of the lacquer mixture used in the process volume, wherein the temperature optionally is in a range from 8° C to 28° C.

If not specified otherwise and if relevant for the respective property, the given values for the respective properties shall be considered for a pressure of 1,01325 bar.

The radius of curvature of the one or more convex curvatures of the curved contour may be adapted to the flow properties of the lacquer mixture to be used with the lacquer basin.

The overflow structure of the lacquer basin may comprise a protrusion extending in a radially inward direction towards a central axis of the lacquer basin. The overflow structure may be provided by or comprise a radially inwardly curved side wall at the upper edge of the side wall. This may provide the advantage that an extended slope and/or an increased radius of curvature of the overflow structure may be achieved without necessarily increasing a thickness of the side wall. Moreover, this may provide the advantage that underneath the surface of the side wall that is directed in a radially inwards direction towards the center axis of the lacquer basin a flow of the lacquer mixture may be directed towards the center of the tank. This flow direction may be opposite to the actual flow direction of the overflow and may be regarded as a backflow. This may provide the effect that particles may be prevented from sinking into the center of the lacquer basin and may be discharged into the overflow with a higher efficiency.

The overflow structure of the lacquer basin may comprise a first convex curvature, a second convex curvature, and a sloped edge in a radially outward direction between the first curvature and the second curvature. This may facilitate the manufacturing of the overflow structure and, thus, of the side wall and/or the lacquer basin and allow producing the lacquer basin at lower costs compared to other configurations of the overflow structure.

It is understood by a person skilled in the art that the above-described features and the features in the following description and figures are not only disclosed in the explicitly disclosed embodiments and combinations, but that other technically feasible combinations as well as the isolated features are comprised by the disclosure as well. In the following, several optional embodiments and specific examples are described with reference to the figures to illustrate the disclosure without limiting the disclosure to the embodiments described.

Optional embodiments of the disclosure will be illustrated in the following with reference to the figures. The figures show:
- Fig. 1A: shows a lacquer basin for a dip coating device according to an optional embodiment,
- Fig. 1B: shows a coating device according to an optional embodiment,
- Fig. 2A: shows an overflow structure according to an optional embodiment,
- Fig. 2B: shows an overflow structure according to an optional embodiment,
- Fig. 2C: shows an overflow structure according to an optional embodiment,
- Fig. 2D: shows an overflow structure according to an optional embodiment,
- Fig. 2E: shows an overflow structure according to an optional embodiment,
- Fig. 3: illustrates a method for dip coating an ophthalmic lens according to an optional embodiment,
- Fig. 4: illustrates a method for manufacturing an ophthalmic lens according to an optional embodiment, and
- Fig. 5: shows an ophthalmic lens according to an optional embodiment.

In the drawings the same reference signs are used for corresponding or similar features in different drawings.

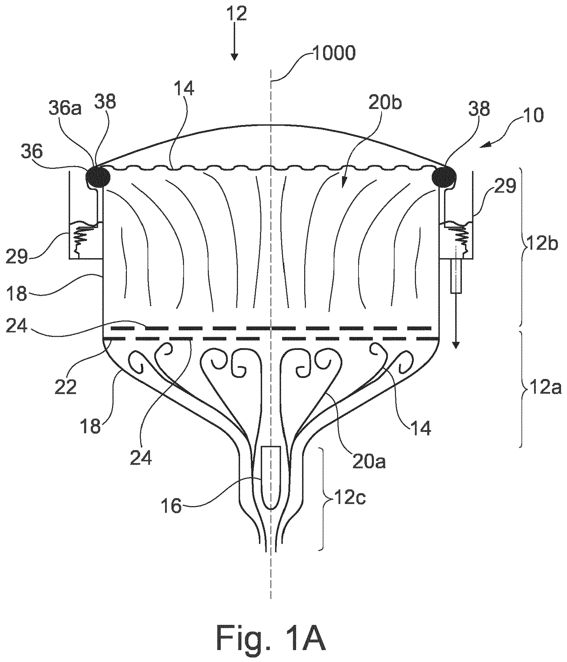

Figure 1A shows a lacquer basin 12 for a dip coating device 10 according to an optional embodiment. The lacquer basin 12 comprises a side wall 18 confining a process volume 12b for dip coating one or more objects in a stream of the lacquer mixture 14 fed into the process volume 12b, wherein an upper edge of the side wall 18 provides an overflow structure 36. An overflow channel 29 is arranged directly at an outer side of the side wall 18, wherein the overflow channel 29 is adapted to collect a lacquer mixture 14 overflowing from the process volume 12b over the overflow structure 36. The overflow structure 36 has a curved contour 36a which is adapted to enable a flow of the lacquer mixture 14 overflowing the overflow structure 36 from the process volume 12b into the overflow channel 29 as a continuous film.

The curved contour of the overflow structure 36 has one or more convex curvatures 38 which are overflown by the lacquer mixture 14 when the lacquer mixture 14 overflows the overflow structure 36 from the process volume 12b to the overflow channel 29.

The one or more convex curvatures 38 may have a radius of curvature in a range between 1 mm and 15 mm.

According to the optional embodiment presented in Figure 1A, the curved contour of the overflow structure 36 has exactly one convex curvature 38 having a radius of curvature in the range from 5 mm to 15 mm and optionally in the range from 10,5 mm to 15 mm.

Optionally, the curved contour has no concave indentations.

The curved contour is adapted to flow properties of the lacquer mixture 14 to be used with the lacquer basin 12.

The flow properties of the lacquer mixture 14 may comprise at least one of the following properties:
- a viscosity of the lacquer mixture 14, wherein the viscosity optionally is in a range from 0,587 mPa·s to 200 mPa·s at a temperature of 20° C;
- a surface tension of the lacquer mixture 14, wherein the surface tension optionally is in a range from 22,6 mN/m to 150 mN/m at a temperature of 20° C;
- a density of the lacquer mixture 14, wherein the density of the lacquer mixture 14 optionally is in a range from 0,787 kg/m³ to 1.280 kg/m3 at a temperature of 20° C;
- a volume flow of the lacquer mixture 14 fed into the process volume, wherein the volume flow optionally is in a range from 1 L/min to 15 L/min; and
- a temperature of the lacquer mixture 14 used in the process volume, wherein the temperature optionally is in a range from 8° C to 28° C.

The radius of curvature of the one or more convex curvatures of the curved contour is adapted to the flow properties of the lacquer mixture (14) to be used with the lacquer basin (12).

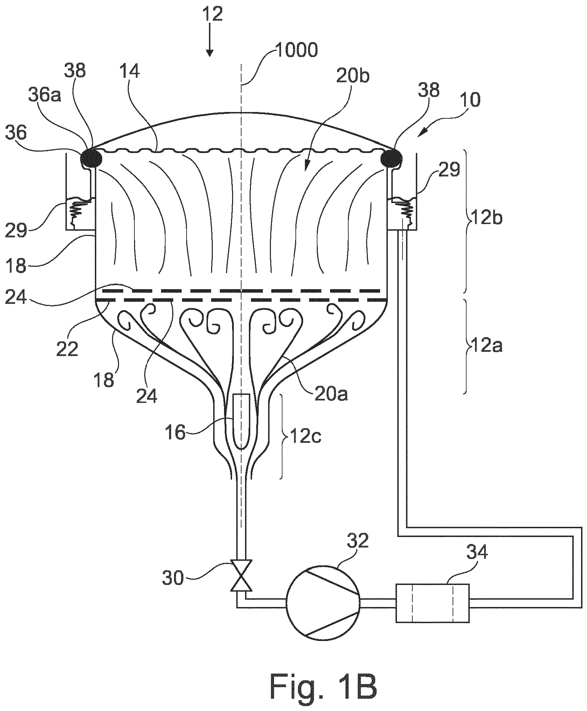

Figure 1B illustrates a coating 502 device for dip coating 502 an ophthalmic lens 500 according to an optional embodiment. The coating 502 device comprises a lacquer basin 12 according to the optional embodiment shown in Figure 1A. The dip coating device further comprises a tubing, a valve 30, a pump 32 and a filter element 34 to circulate the lacquer mixture 14.

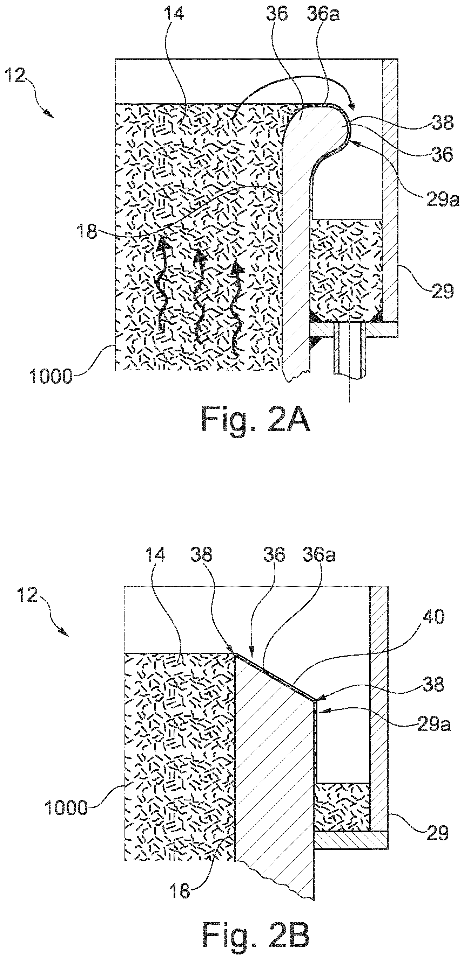

Figure 2A illustrates a lacquer basin 12 according to an optional embodiment. The radius of curvature of the convex curvature 38 of the curved contour 36a is adapted to the flow properties of the lacquer mixture 14 to be used with the lacquer basin 12. The curved convex curvature 38 may have a radius in the range from 5 mm to 15 mm and optionally in the range from 10,5 mm to 15 mm. This may provide the advantage that the flow of the overflowing lacquer mixture 29a as a continuous film may be enhanced and, thus, a risk of drying and solidification of the overflowing lacquer mixture 29a may be effectively reduced.
Figure 2B illustrates an overflow structure 36 according to an optional embodiment. The overflow structure 36 comprises a first convex curvature 38, a second convex curvature 38, and a sloped edge 40 in a radially outward direction between the first curvature 38 and the second curvature 38. The first convex curvature 38 and the second convex curvature 38 may have the same or different radii of curvature. The radius of curvature of the first and second convex curvature 38 may each be in a range from 1 mm to 5 mm. The sloped edge 40 may be sloped downwards in a radially outward direction. This may facilitate to flow of the overflowing lacquer mixture 29a as a continuous film into the overflow channel 29. The curved contour of the overflow structure 36 has two convex curvatures 38 each having a radius of curvature in a range from 1 mm to 9 mm and optionally in a range from 1 mm to 5 mm.

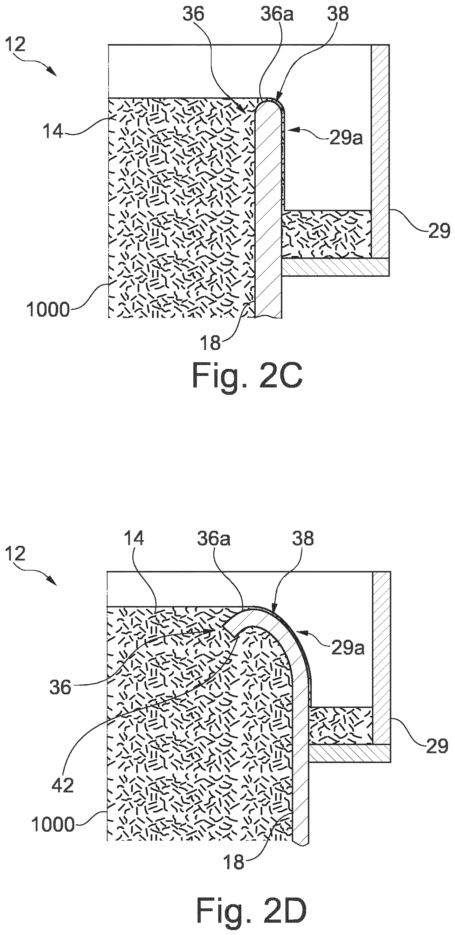

Figure 2C illustrates a lacquer basin 12 according to an optional embodiment. The overflow structure 36 comprises a rounded upper end of the side wall having a radius of curvature which may be in a range from 5 mm to 15 mm. The overflow structure 36 according to this embodiment may facilitate the manufacturing process for manufacturing the lacquer basin 12.
Figure 2D illustrates a lacquer basin 12 according to an optional embodiment. The overflow structure 36 comprises a protrusion 42 extending in a radially inward direction towards a central axis 1000 of the lacquer basin 12. The protrusion 42 may form a convex curvature 38 at its upper side, wherein the convex curvature may have a radius of curvature in a range from 5 mm to 15 mm, and optionally in a range from 10,5 mm to 15 mm.

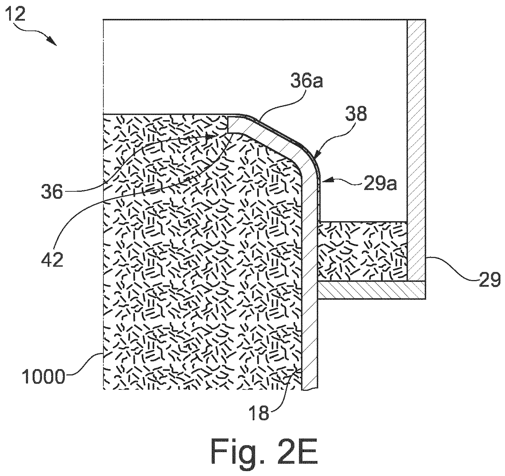

Figure 2E illustrates a lacquer basin 12 according to an optional embodiment. The overflow structure 36 comprises a protrusion 42 extending in a radially inward direction towards a central axis 1000 of the lacquer basin 12. The protrusion 42 may be adapted such as to provide a sloped edge 40 at the upper side of the protrusion 40 adjoined by a convex curvature 38 which may have a radius of curvature in a range from 1 mm to 5 mm.

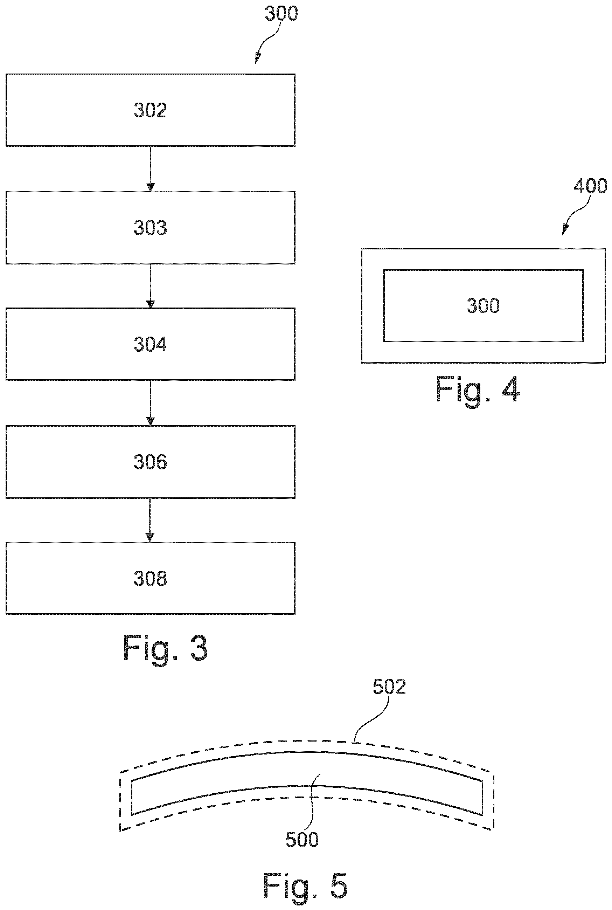

Figure 3 illustrates a method 300 for dip coating an ophthalmic lens 500 according to an optional embodiment. The method comprises providing 302 of a coating device 10 comprising a process volume 12 containing a lacquer mixture 14, dipping 304 the ophthalmic lens 500 into the process volume of the coating device 10 such that the ophthalmic lens 500 is entirely immersed in the stream of the lacquer mixture 14, removing 306 the ophthalmic lens 500 from the process section or process volume and curing 308 the lacquer mixture 14 adhering to the ophthalmic lens 500.

The method 300 further comprises a step 303 of adjusting the lacquer mixture 14 prior to dipping 304 the ophthalmic lens 500 into the process volume 12 such that the lacquer mixture 14 meets one or more of the following conditions at a pressure of 1,01325 bar:
- a viscosity of the lacquer mixture (14) is in a range from 0,587 mPa·s to 200 mPa·s at a temperature of 20° C;
- a surface tension of the lacquer mixture (14) is in a range from 22,6 mN/m to 150 mN/m at a temperature of 20° C;
- a density of the lacquer mixture (14) is in a range from 0,787 kg/m3 to 1.280 kg/m3 at a temperature of 20° C;
- a volume flow of the lacquer mixture (14) fed into the process volume is in a range from 1 L/min to 15 L/min; and
- a temperature of the lacquer mixture (14) used in the process volume is in a range from 8° C to 28° C.

Step 303 may be carried out one time, multiple times, regularly or continuously. Step 308 may include adjusting the lacquer mixture in a continuous manner.

Adjusting 303 the lacquer mixture 14 may include adjusting a ratio of lacquer to solvent of the lacquer mixture 14, adjusting a temperature of a lacquer supplied to the lacquer mixture 14, adjusting a temperature of a solvent supplied to the lacquer mixture 14, and/or adjusting a temperature of the lacquer mixture 14.

Providing 302 the lacquer basin may include providing a lacquer basin according to the disclosure and optionally according to an embodiment disclosed in this document.

Figure 4 illustrates a method 400 for manufacturing an ophthalmic lens 500 according to an optional embodiment. The method 400 comprises dip coating the ophthalmic lens 500 using a method 300 according to the embodiment described with reference to Figure 3.

Figure 5 schematically depicts an ophthalmic lens 500 having a coating 502 applied to it, wherein the ophthalmic lens 500 is obtained or obtainable by a method according to the embodiment illustrated in Figure 4.

### List of reference signs

- 10: dip coating device
- 12: lacquer basin
- 12a: inlet section
- 12b: process section
- 12c: sedimentation section
- 14: lacquer mixture
- 16: injection nozzle
- 18: side wall
- 20a: turbulent flow
- 20b: laminar flow
- 22: diversion element
- 24: barrier layer
- 26: lamella
- 28: recess
- 29: overflow channel
- 29a: overflowing lacquer mixture
- 30: valve
- 32: pump
- 34: filter element
- 36: overflow structure
- 36a: curved contour
- 38: convex curvature
- 40: sloped edge
- 42: protrusion
- 300: method for dip coating an ophthalmic lens
- 302-308: method steps
- 400: method for manufacturing an ophthalmic lens
- 500: ophthalmic lens
- 502: coating
- 1000: central axis

## Claims

1. Method (300) for dip coating an ophthalmic lens (500), the method comprising:
- providing (302) a coating device (10) comprising a process volume (12) containing a lacquer mixture (14);
- dipping (304) the ophthalmic lens (500) into the process volume (12) of the coating device (10) such that the ophthalmic lens (500) is entirely immersed in the stream of the lacquer mixture (14); and
- removing (306) the ophthalmic lens (500) from the process volume (12b) and curing (308) the lacquer mixture (14) adhering to the ophthalmic lens (500);
**characterized in that** the method further comprises:
- adjusting (303) the lacquer mixture (14) prior to dipping the ophthalmic lens (500) into the process volume (12) such that the lacquer mixture (14) meets one or more or all of the following conditions at a pressure of 1,01325 bar:
- a viscosity of the lacquer mixture (14) is in a range from 0,587 mPa·s to 200 mPa·s at a temperature of 20° C;
- a surface tension of the lacquer mixture (14) is in a range from 22,6 mN/m to 150 mN/m at a temperature of 20° C;
- a density of the lacquer mixture (14) is in a range from 0,787 kg/m³ to 1.280 kg/m³ at a temperature of 20° C;
- a volume flow of the lacquer mixture (14) fed into the process volume is in a range from 1 L/min to 15 L/min; and
- a temperature of the lacquer mixture (14) used in the process volume is in a range from 8° C to 28° C.

2. Method (300) according to claim 1, wherein adjusting (303) the lacquer mixture (14) includes at least one of
- adjusting a ratio of lacquer to solvent of the lacquer mixture (14);
- adjusting a temperature of a lacquer supplied to the lacquer mixture (14); and
- adjusting a temperature of a solvent supplied to the lacquer mixture (14);
- adjusting a temperature of the lacquer mixture (14).

3. Method (400) for manufacturing an ophthalmic lens (500), the method comprising dip coating the ophthalmic lens (500) using a method according to claim 1 or 2.

4. Ophthalmic lens (500) obtained or obtainable by a method according to claim 3.

5. Lacquer basin (12) for a dip coating device (10), the lacquer basin (12) comprising:
- a side wall (18) confining a process volume for dip coating (502) one or more objects in a stream of the lacquer mixture (14) fed into the process volume, wherein an upper edge of the side wall (18) provides an overflow structure (36);
- an overflow channel (29) being arranged directly at an outer side of the side wall (18), wherein the overflow channel (29) is adapted to collect a lacquer mixture (14) overflowing from the process volume over the overflow structure (36);
**characterized in that**
the overflow structure (36) has a curved contour which is adapted to enable a flow of the lacquer mixture (14) overflowing the overflow structure (36) from the process volume into the overflow channel (29) as a continuous film.

6. Lacquer basin (12) according to claim 5, wherein the curved contour of the overflow structure (36) has one or more convex curvatures which are overflown by the lacquer mixture (14) when the lacquer mixture (14) overflows the overflow structure (36) from the process volume to the overflow channel (29); and
wherein the one or more convex curvatures optionally have a radius of curvature in a range between 1 mm and 15 mm.

7. Lacquer basin (12) according to claim 5, wherein the curved contour of the overflow structure (36) has exactly one convex curvature having a radius of curvature in the range from 5 mm to 15 mm and optionally in the range from 10,5 mm to 15 mm.

8. Lacquer basin (12) according to claim 5 or 6, wherein the curved contour of the overflow structure (36) has two or more convex curvatures each having a radius of curvature in a range from 1 mm to 9 mm and optionally in a range from 1 mm to 5 mm.

9. Lacquer basin (12) according to any one of the claims 5 to 8, wherein the curved contour has no concave indentations.

10. Lacquer basin (12) according to any one of the claims 5 to 9, wherein the curved contour is adapted to flow properties of the lacquer mixture (14) to be used with the lacquer basin (12).

11. Lacquer basin (12) according to claim 10, wherein the flow properties of the lacquer mixture (14) comprise at least one of the following properties:
- a viscosity of the lacquer mixture (14), wherein the viscosity optionally is in a range from 0,587 mPa·s to 200 mPa·s at a temperature of 20° C;
- a surface tension of the lacquer mixture (14), wherein the surface tension optionally is in a range from 22,6 mN/m to 150 mN/m at a temperature of 20° C;
- a density of the lacquer mixture (14), wherein the density of the lacquer mixture (14) optionally is in a range from 0,787 kg/m³ to 1.280 kg/m³ at a temperature of 20° C;
- a volume flow of the lacquer mixture (14) fed into the process volume, wherein the volume flow optionally is in a range from 1 L/min to 15 L/min; and
- a temperature of the lacquer mixture (14) used in the process volume, wherein the temperature optionally is in a range from 8° C to 28° C.

12. Lacquer basin (12) according to claim 10 or 11, wherein the radius of curvature of the one or more convex curvatures of the curved contour is adapted to the flow properties of the lacquer mixture (14) to be used with the lacquer basin (12).

13. Lacquer basin (12) according to any one of the claims 5 to 12, wherein the overflow structure (36) comprises a protrusion extending in a radially inward direction towards a central axis (1000) of the lacquer basin (12).

14. Lacquer basin (12) according to any one of the claims 5 to 13, wherein the overflow structure (36) comprises a first convex curvature, a second convex curvature and a sloped edge in a radially outward direction between the first curvature and the second curvature.

15. Coating (502) device for dip coating (502) an ophthalmic lens (500), **characterized in that** the coating (502) device comprises a lacquer basin (12) according to any one of the claims 5 to 14.
